# EUROPÄISCHE PATENTSCHRIFT

(11) **EP 2 602 237 B1**
(45) Veröffentlichungstag und Bekanntmachung des Hinweises auf die Patenterteilung: **11.06.2025**
(21) Anmeldenummer: 12008122.9
(22) Anmeldetag: 05.12.2012
(51) Int. Cl.: C04B 38/10

(54) **VORRICHTUNG ZUR HERSTELLUNG EINES MINERALISCHEN SCHAUMS**
APPARATUS FOR PREPARATION OF A MINERAL FOAM
DISPOSITIF POUR LA PREPARATION D'UNE MOUSSE MINÉRALE

(30) Priorität: 05.12.2011 DE 202011108616 U; 24.10.2012 DE 102012020841
(43) Veröffentlichungstag der Anmeldung: 12.06.2013
(73) Patentinhaber: Franken Maxit Mauermörtel GmbH & Co., 95359 Kasendorf (DE)
(72) Erfinder: Groppweis, Sebastian, 95349 Thurnau (DE); Scharfe, Friedbert, 95359 Kasendorf (DE); Wagner, Horst, 94545 Hohenau (DE)
(74) Vertreter: Küchler, Stefan

(56) Entgegenhaltungen:
- EP-A1- 1 206 962
- EP-A1- 1 433 768
- WO-A1-03/022776
- WO-A1-2007/134349
- WO-A1-2011/106816
- DE-A1- 1 947 365
- DE-A1- 2 522 106
- DE-A1- 3 241 193
- GB-A- 608 276

## Beschreibung

Die Erfindung richtet sich auf eine Vorrichtung zur Herstellung eines mineralischen, geschäumten Materials, umfassend eine Mörtelpumpe und/oder einen Mörtelmischer mit einer automatischen Abgabeeinrichtung.

Für die Wärmedämmung von Gebäuden werden derzeit Wärmedämm-Verbundsysteme angeboten, umfassend wenigstens eine Dämmplattenschicht aus Mineralwolle und eine Schicht aus einem mineralischen Putz. Ein Vorteil hiervon ist, dass derartige Substanzen im Gegensatz zu anderen Isolationen nicht brennbar sind. Solche Wärmedämm-Verbundsysteme können auf Beton oder Mauerwerk befestigt werden. Ein Nachteil ist jedoch, dass derartige Verbundsysteme aufgrund der Mehrzahl von Schichten eine vergleichsweise große Gesamtdicke aufweisen. Auch stellt sich das Problem, zwischen den verschiedenen Schichten eine ausreichende, mechanische Festigkeit zu gewährleisten.

Die WO 2011/106816 A1 offenbart eine Formulierung zur Herstellung eines brandhemmenden Mineralschaums, welche jeweils einen oder mehrere Sulfat-Aluminat-Zemente, Sulfatkomponenten, Aluminiumsilikate sowie Calciumoxid bereitstellende Komponenten umfasst. Dabei ist der Sulfat-Aluminat-Zement in einem Anteil ausgewählt aus einem Bereich von 55 Gewichtsanteilen und 85 Gewichtsanteilen enthalten ist, die Sulfatkomponente in einem Anteil enthalten ist, dass ein Sulfatanteil zwischen 5 Gewichtsanteilen und 15 Gewichtsanteilen beträgt, das Aluminiumsilikat in einem Anteil enthalten ist, dass der Al₂O₃-Anteil zwischen 3 und 30 Gewichtsanteilen beträgt, und die Calciumoxid bereitstellende Komponente in einem Anteil enthalten ist, dass der CaO-Anteil zwischen 0,5 und 2 Gewichtsanteilen beträgt. Weiterhin wird ein Mineralschaum und ein Verfahren zur Herstellung des Mineralschaums beschrieben. Dabei wird der Hauptkomponente der Formulierung jenseits eines Paddel-Mischers eine in einem Schaumgenerator hergestellte Schaumkomponente hinzugefügt. Diese Schaumkomponente besteht entweder aus einem Proteinschaum oder einem Tensidschaum. Es wird also der Mineralschaum, d.h., die Formulierung für den Mineralschaum, nach der Vorerfindung nicht direkt aufgeschäumt, sondern die Porenbildung des Mineralschaums erfolgt durch die Zugabe eines eigenen Schaums. Anstelle eines mechanischen Schäumvorgangs findet hierbei also ein chemisches Aufschäumen statt, womit unweigerlich eine Belastung der Umnwelt verbunden ist.

In der DE 1 947 365 A wird ein Verfahren zum Herstellen eines zellförmigen Werkstoffs sowie fester, wassergebundener, zellförmiger gechäumter Stoff mit einem anorganischen, hydraulischen Bindemittel beschrieben. Dabei bezieht sich die Vorerfindung auf ein Verfahren zur Herstellung poröser gechäumter Stoffe durch Freisetzen von Gas in einer wasserabbindenden Schlämme, die Portland-Zement, Hochtonerdezement oder gebrannten Gips sowie ein partikel-förmiges, lamellares Schaumstabilisierungsmittel enthält, wobei man das Gemisch anschließend aufschäumen und abbinden lässt. Dabei ist innerhalb einer Mischkammer, welcher die trocken vorgemischte Substanz aus einem Feststoffvorratsbehälter mittels eines Schneckenförderers einerseits und eine Flüssigkeit, insbesondere Wasser, mittels einer Dosierpumpe andererseits zugeführt wird, eine Förderschnecke angeordnet, welche die Substanz einerseits vermischt und andererseits zu einem Auslass fördert. Obzwar diese Förderschnecke etwa radial auskragende Mischstäbe aufweist, findet hier keine Verengung des Strömungspfades statt, weil jene Mischstäbe entlang der gesamten Förderschnecke angeordnet sind und also keine Verengung im Laufe der Förderrichtung verursachen.

Die in der DE 32 41 193 A1 offenbarte Erfindung betrifft eine Vorrichtung zum kontinuierlichen Mischen von Trockengut mit einer Flüssigkeit und zum Fördern des Mischguts, umfassend einen Vorratsbehälter für das Trockengut, Dosierarmaturen für die Zugabe der Flüssigkeit, einem vertikal angeordneten Mischer. Letzterer umfasst ein vertikales Rohr, worin eine Mischerachse drehbar gelagert ist. Neben einem schneckenförmigen oberen Teil trägt diese Mischerachse auch Schleuderflügel, Mischerflügel und Abstreifer, welche über Stege mit der Mischerwelle verbunden sind. Am unteren Ende der Welle sind Mitnehmerfinger vorgesehen für den Antrieb der Exzenterschnecke einer sich anschließenden Förderpumpe. Keiner der mit der Mischerachse verbundenen Elemente führt zu einer substantiellen Verengung der geförderten Möftelsubstanz und kann daher keine substantielle Schäumung veranlassen. Außerdem ist im unteren Nassbereich keine Zufuhr von Luft vorgesehen, welche für die mechanische Bildung von Poren wichtig wäre, um jene offenzuhalten.

Die DE 25 22 106 A1 offenbart eine Vorrichtung zum kontinuierlichen statischen Mischen fließfähiger Stoffe. Diese Vorrichtung besteht aus einem rohrartigen Gehäuse mit mindestens einem darin angeordneten Mischeinsatz, der aus in zwei sich schneidenden, schräg zur Gehäusewandung ausgerichteten Ebenen angeordneten Stegen besteht, wobei sich jeweils zwischen zwei Stegen ein Durchströmschlitz befindet. Die Vorrichtung zeichnet sich dadurch aus, dass die Stege der beiden Ebenen an einem gemeinsamen, senkrecht zur Längsachse der Stege verlaufenden sich quer durch das Gehäuse erstreckenden Verbindungssteg angeordnet sind, mit dem sie ein einziges Stück bilden und dass die Durchströmschlitze bis an die Wandung des Gehäuses reichen. Hier gibt es keine zentrale Seele oder Lanze zur Stabilisierung dieser Stege, so dass jene unter dem Druck der geförderten Mörtelsubstanz verformt werden können. Außerdem fehlt auch hier eine Möglichkeit für die Zufuhr von Luft, die eine mechanische Bildung von Poren unterstützt.

Eine ähnliche Anordnung ist der EP 1 206 962 A1 zu entnehmen. Diese offenbart eine Komponente für einen statischen Mischer, der allerdings nicht zum Schäumen der gemischten Substanz geeignet ist. Die daraus vorbekannte Komponente wird durch Schneiden und Umformen oder durch Stanzen aus einem ebenen Materialband hergestellt und erstreckt sich in einer durch das Materialband gegebenen Längsrichtung innerhalb eines bspw. zylindrischen Mischer- und/oder Förderrohrs. Auch hier fehlt einerseits eine zentrale, in Längsrichtung des betreffenden Rohrs verlaufende Seele oder Lanze zur Aufnahme von in Längsrichtung des Mischer- und/oder Förderrohrs wirkenden Kräften, und andererseits auch jegliche seitliche Öffnung innerhalb des Mischer- und/oder Förderrohrs für die aktive oder passive Zuführung von Luft.

In der GB 608 276 A wird eine Maschine zum Mischen von Beton und dergleichen beschrieben, wobei Sand und Zuschlagstoffe in Kammern platziert werden, die in einer Reihe angeordnet sind, und von einem Wendelförderer beschickt werden, der sich durch zwei Kammern erstreckt. Innerhalb einer Mischkammer trägt die dortige angetriebene Welle etwa radial auskragende Paddel, welche die noch flüssige Mörtelsubstanz sowohl mischen als auch fördern. Eine substantielle Porenbildung ist damit jedoch nicht verbunden, weil durch diese Paddel der Förderquerschnitt nicht verengt wird. Dementsprechend beansprucht der Vorerfinder auch keinen Schäumungsvorgang innerhalb des Mischers..

Aus den Nachteilen des beschriebenen Standes der Technik resultiert das die Erfindung initiierende Problem, eine gattungsgemäße Vorrichtung derart weiterzubilden, dass die oben beschriebenen Nachteile überwunden werden. Insbesondere sollen von einem damit hergestellten Mineralschaum welcher selbst nicht Teil der Erfindung ist, die folgenden Parameter gleichzeitig möglichst vollständig erfüllt werden: Unbrennbarkeit, hohe Wärmedämmung sowie geringe Gesamtdicke.

Die Lösung dieses Problems gelingt bei einer gattungsgemäßen Vorrichtung durch die Merkmale gemäß Anspruch 1.

Hierzu dient eine mechanische Schäumvorrichtung, womit die Masse möglichst starken Druckgradienten ausgesetzt wird, insbesondere mit der Bildung lokaler Unterdruckbereiche, wo die Masse aufreißen kann. Außerdem wird dabei - insbesondere in den Unterdruckbereichen oder in deren Nähe - (Druck-) Luft angeboten oder eingeblasen, bspw. mittels einer oder mehrerer Lanzen, welche in den Mischbereich hineinragen; ggf. kann auch die Kneteinrichtung selbst mit inneren, schließlich in die zu knetende Masse mündenden Kanälen versehen sein, wodurch Luft in die Masse hinein gelangt und dort aufgerissene Poren füllt und offenhält.

Dieses mechanische Schäumungsprinzip basiert darauf, dass im Bereich der Abgabeeinrichtung einer Misch- oder Pumpeinrichtung für die Masse der freie Querschnitt des Strömungspfades für die Masse durch ein, zwei oder mehrere, in Strömungsrichtung des Mörtels hintereinander angeordnete, flächige Hindernisse verjüngt ist.

Derartige Strömungshindernisse müssen von der Masse umflossen werden. Weil bei einer kontinuierlichen Strömung auch in den verengten Bereichen der gleiche Massendurchsatz herrscht wie in den querschnittlich erweiterten Bereichen, erhöht sich an den Engpässen die Strömungsgeschwindigkeit; gleichzeitig muß die Masse ihre Strömungsrichtung ändern, ggf. sogar mehrmals. Aufgrund dieser Zusammenhänge treten innerhalb der Masse Scherungen und/oder Verwirbelungen auf, welche mit lokalen Unterdruckbereichen verbunden sind, so dass die Masse an bereits vorhandenen Poren weiter aufreißt und dabei Luft aufnimmt, welche ein anschließendes Zusammenfallen der Poren verhindert. Somit wird durch diese Maßnahme der Volumenanteil der Luftporen gesteigert, mithin auch das thermische Isolationsvermögen.

Dabei sind zwei oder mehrere flächige Hindernisse auf wenigstens einer Seele oder Lanze in dem Strömungspfad der Masse angeordnet. Da die Masse an einer vertikalen Wand haften soll - unter Umständen sogar an einer Decke hängend - muß sie vergleichsweise zäh sein. Dies hat jedoch zur Folge, dass eine derartige zähe Masse nur unter großem Energieeinsatz gefördert werden kann, wobei Strömungshindernisse baldigst mit einem enormen Fließwiderstand einhergehen. Umgekehrt drückt dieser Fließwiderstand auch gegen die Strömungshindernisse und versucht, diese "wegzuschwemmen". Damit diese jener starken Kraft widerstehen können, müssen sie in ausreichender Weise verankert sein. Dies leistet wenigstens eine vorzugsweise in Strömungsrichtung verlaufend angeordnete Lanze oder Seele. Hierbei handelt es sich vorzugsweise um einen stabilen Metallstab mit einem Durchmesser von wenigstens 3 mm, besser noch 5 mm bis 25 mm, insbesondere 10 mm bis 20 mm.

Zwei oder mehrere, flächige Hindernisse sind als gebogene Plättchen ausgebildet. Entgegen linienhaften Hindernissen, welche zwar den Mörtelstrang ggf. in mehrere Teile zerteilen können, andererseits aber leicht umflossen werden können, bilden flächenhafte Körper für die Strömung ernsthaftere Hindernisse und zwingen den Mörtelstrang damit, seine innere Struktur zu ändern, wobei dieser dann an vorhandenen Poren weiter aufreißt. Die gebogenen Plättchen weisen einen V-förmigen Querschnitt auf, wobei die Spitze des V stromaufwärts weist, die beiden freien Schenkelenden dagegen stromabwärts. Damit kann das Strömungsverhalten präzise eingestellt werden. Man kann sich hierbei vorstellen, dass die Plättchen zunächst mit einem bspw. kreisförmigem Umriß ausgeschnitten sind, dessen Durchmesser bspw. dem Innendurchmesser des betreffenden Rohrabschnitts entspricht; durch anschließendes Biegen entlang einer durch den Mittelpunkt verlaufenden, geraden Linie erhalten die Plättchen sodann etwa die Geometrie von zwei halbkreisförmigen Flügeln, welche mittig aneinanderstoßen; der Zwischenwinkel im Bereich der Knicklinie ist kleiner als 180°, vorzugsweise kleiner als 120°, insbesonder kleiner als 90°, aber größer als 0°, vorzugsweise größer als 15°, insbesondere größer als 30°. Besonders bewährt haben sich Zwischenwinkel von 30° bis 60°, insbesondere bei etwa 45°.

Ferner ist im Bereich des die flächigen Hindernisse umgebenden Rohrs wenigstens ein Anschluß zur aktiven oder passiven Zuführung von Luft vorgesehen. Dort kann die Masse beim Aufreißen der Poren zusätzlich Luft aufnehmen. Diese kann entweder passiv von der aufreißenden Mörtelmasse selbst angesaugt werden, oder aber aktiv hineingepreßt werden, bspw. mittels Preßluft. Ggf. müßte an einem Luftanschluß ein Rückschlagventil angeordnet werden, damit weder Luft noch Masse oder Bestandteile derselben entweichen können.

Bevorzugt ist eine erfindungsgemäße Seele oder Lanze konzentrisch zu bzw. innerhalb einem Rohr der Abgabeeinrichtung für die Masse angeordnet. Bei zentraler Anordnung halten sich die Kräfte der zu beiden Seiten überstehenden Widerstandskörper, insbesondere Widerstandsplättchen, jeweils die Waage, und die Lanze erfährt im Idealfall weder Biege- noch Seitenkräfte, sondern ausschließlich axiale kräfte in ihrer Längsrichtung. Hierzu ist es besonders förderlich, wenn die Lanze oder Seele selbst einem gerade gestreckten Verlauf folgt und in einem geraden Rohrabschnitt angeordnet ist, insbesondere konzentrisch zu dem betreffenden Rohrabschnitt.

Bevorzugt verfügt die Seele oder Lanze an einem oder beiden Enden, zumindest an ihrem stromabwärtigen Ende, über ein quer bzw. diametral zu dem umgebenden Rohr verlaufendes Element, bspw. eine angeschweißte Querstange oder Platte mit in Strömungsrichtung verlaufender Ebene. Diese hat/haben einerseits die Aufgabe, die Seele oder Lanze in koaxialer Ausrichtung innerhalb des Rohrs abzustützen, also gegenüber Seitenkräften zu zentrieren; andererseits kann eine derartige, am stromabwärtigen Ende angeordnete Querstange oder Platte sich an einer dortigen Verjüngung innerhalb des Strömungspfades gegenüber axialen Belastungen abstützen, bspw. an einem am stromabwärtigen Rohrende befestigbaren, bspw. aufschraubbaren Deckel.

Im Rahmen einer anderen Ausführungsform könnte das die Strömungshindernisse aufweisende Rohr entlang seiner Längsrichtung in mehrere Teilschalen unterteilt sein, bspw. in zwei Halbschalen. Solchenfalls könnten die Strömungshindernisse direkt an den Innenseiten dieser Schalen, insbesondere an den beiden Halbschalen, befestigt sein, so dass in diesem Fall eine Seele oder Lanze zur Aufreihung und Halterung der Strömungswhindernisse nicht erforderlich wären. Jedoch hat sich ein einteiliges Rohrstück als druckfester erwiesen als ein aus mehreren Teilschalen aufgebautes Rohrstück, so dass die Ausführungsform mit aus einem einteiligen Rohr entnehmbarer Seele oder Lanze im Allgemeinen zu bevorzugen sein dürfte.

Stromaufwärts der Abgabeeinrichtung ist eine Pumpeinrichtung angeordnet, insbesondere eine Schneckenmantelpumpe oder eine Schlauch- oder Kolbenpumpe. Diese erzeugt den notwendigen Strömungsdruck, um die Masse zur Abgabeeinrichtung und weiter durch einen dort angeschlossenen Schlauch bis zu der Wand zu befördern. Eine Schneckenmantelpumpe besteht im Allgemeinen aus einem Schneckenmantel als Stator und einer darin drehbeweglich angetriebenen Förderschnecke als Rotor.

Auch im Bereich der Pumpeinrichtung kann wenigstens ein Anschluß zur aktiven oder passiven Zuführung von Luft vorgesehen sein, um der Mörtelmasse bei Bedarf Luft anzubieten. Jedoch sollte der Einsatz solcher Luftzugänge in diesem Abschnitt wohl erwogen werden, damit nicht etwa unter dem Einfluß des Förderdruckes der Pumpe Luft aus der Masse herausgepreßt wird. Ggf. müßte an einem dortigen Luftanschluß ein Rückschlagventil angeordnet werden, damit weder Luft noch Masse oder Bestandteile derselben entweichen können.

Es liegt im Rahmen der Erfindung, dass stromaufwärts der Pumpeinrichtung eine Mischeinrichtung vorgeschaltet ist, insbesondere ein Mischtopf. Dort kann der Mörtel sozusagen frisch zubereitet werden, insbesondere aus einer Trockenmischung und Wasser, oder gar aus den Einzelteilen wie Sand, Zement und/oder Kalk sowie Wasser. Damit läßt sich die Feuchtigkeit und auch die Zähigkeit den jeweiligen Anforderungen entsprechend präzise einstellen.

Ein innerhalb des Mischtopfs angeordneter Rührer übernimmt die Aufgabe, aus den ursprünglich getrennten Zutaten eine homogene Masse herzustellen. Daneben wird ihm im Rahmen der vorliegenden Erfindung jedoch auch die Aufgabe übertragen, innerhalb der Mörtelmasse Poren zu schaffen, die dann zu einem späteren Zeitpunkt ggf. noch vergrößert werden können.

Weitere Vorteile ergeben sich dadurch, dass der Rührer konzentrisch mit der Schnecke der Pumpeinrichtung ausgerichtet ist. Dadurch können die Drehantriebe dieser beiden Einrichtungen ggf: miteinander kombiniert werden, um den konstruktiven Aufwand weiter zu reduzieren, da solchenfalls nur ein einziger Antrieb erforderlich ist.

Die Erfindung läßt sich dahingehend weiterbilden, dass der Rührer und die Pumpeinrichtung motorisch angetrieben sind, vorzugsweise von dem selben Motor, insbesondere von einem Elektromotor. Wie oben bereits ausgeführt, setzt die zähe Mörtelmasse jeder äußeren Einwirkung einen nicht unerheblichen Widerstand entgegen, so dass für die erforderliche Pumpleistung ein leistungsstarker Elektromotor mit bspw. 5 bis 20 kW Nennleistung zu empfehlen ist.

Während aus dem Stand der Technik bekannte Rührer zumeist die Gestalt einer Mischwendel aufweisen, also einem in axialer Richtung verbogenen Ring oder einer axial verbogenen Spirale, weist ein erfindungsgemäßer Rührer mehrere, von einer zentralen Achse etwa radial abzweigende Rührfahnen od. dgl. auf. Diese führen den Mörtel nicht entlang einer gesamten Wendel kontinuierlich, sondern rufen nur eine partielle Bewegung herbei, überlassen es diesem dann jedoch selbst, für den notwendigen Druckausgleich zu sorgen, wohl wissend, dass dabei lokale Bereiche mit Unterdruck entstehen, wo sich vermehrt Poren bilden können.

Die Erfindung empfiehlt, dass mehrere Rührfahnen nach Art eines Propellers innerhalb einer gemeinsamen, von der zentralen Achse des Rührers etwa lotrecht durchsetzten Propellerebene liegen. Solchenfalls wird in der betreffenden Ebene die Mörtelmasse in einer gemeinsamen Drehrichtung bewegt, während dies in benachbarten Ebenen nicht der Fall ist. Es bildet sich also in der Mörtelmasse in axialer Richtung ein Geschwindigkeitsgradient, welcher eine Scherung der Mörtelmasse zur Folge hat, also Relativbewegungen innerhalb der Mörtelmasse, welche eine Porenbildung begünstigen.

Indem - wie die Erfindung weiterhin vorsieht - eine oder mehrere Rührfahnen gegenüber der Propellerebene angestellt sind, so dass ihre Hauptebenen mit der Propellerebene einen Winkel α ≠ 0 einschließen, wird durch die Drehbewegung des Rührers der Mörtelmasse zusätzlich zu einer roterenden Strömung auch noch eine axiale Bewegungskomponente erteilt, die weitaus komplexere Ausgleichsbewegungen in der Mörtelmasse erzwingt, insbesondere wenn durch die Wahl der Steigung der Fahnen die axiale Bewegungskomponente stärker oder geringer ist als der von der Förderpumpe hervorgerufene Materialtransport, oder wenn aufgrund einer Steigung der Fahnen in umgekehrter Richtung eventuell sogar eine axiale Strömung entgegen der Pumpen-Förderrichtung bewirkt wird.

Besondes vorteilhafte Eigenschaften lassen sich erzielen, wenn wenigstens zwei Rührfahnen innerhalb der Propellerebene in entgegengesetzten Richtungen gegenüber der Propellerebene angestellt sind. Dies führt dazu, dass bei einer Umdrehung eines derartigen Rührflügel-Propellers der Mötelmasse in der Propellerebene unterschiedliche axiale Bewegungen aufgezwungen werden. Diese können sich dann untereinander verbinden und Verwirbelungen ausbilden, wobei ebenfalls die innere Struktur der Mörtelmasse heftig beeinflußt und dabei auch die Bildung von Poren begünstigt wird.

Ferner kann auch innerhalb der Mischeinrichtung wenigstens ein Anschluß zur aktiven oder passiven Zuführung von Luft vorgesehen sein. Somit kann auch an dieser Stelle der Mörtel ggf. mit Luft versorgen, um gebildete Poren zu füllen.

Ein mit der erfindungsgemäßen Vorrichtung herstellbares Wärmedämm-Material, welches selbst nicht Teil der Erfindung ist, vereinigt Eigenschaften einer Wärmedämmung und eines (Grund-) Putzes in einer einzigen Schicht und ist daher multifunktionell, d.h., mehrere Funktionen wie thermische Isolation und mechanischer Zusammenhalt in einer einzigen Schicht, so dass eine Schicht gegenüber dem Stand der Technik eingespart werden kann und also die gesamte Dicke dieses Materials gegenüber bekannten Verbundsystemen erhöht ist. Darunter muss weder das Wärmedämmungsvermögen leiden noch die Unbrennbarkeit. Ein weiterer Vorteil besteht darin, dass dieses Material zwar vorgefertigt sein kann; es kann aber auch vor Ort in noch flüssigem, pastosen oder plastischen Zustand verarbeitet und also den örtlichen Gegebenheiten optimal angepasst werden; insbesondere lässt sich dadurch eine maximal feste Verbindung mit einem Untergrund herstellen. Mit Ausnahme eventueller Funktionszusätze weist die erfindungsgemäße Zusammensetzung neben den wärmedämmenden Additiven vorzugsweise keine weiteren Zuschlagstoffe auf.

Es hat sich als günstig erwiesen, dass das Volumen-Verhältnis zwischen Additiven, insbesondere wärmedämmenden Additiven, z.B. Leichtzuschlagstoffen, und Bindemittel 1 : 1 beträgt oder mehr, beispielsweise 2 : 1 oder mehr, vorzugsweise 3 : 1 oder mehr, insbesondere 4 : 1 oder mehr, und/oder in einem Bereich zwischen 1 : 1 bis 4 : 1.

Da die wärmedämmenden Eigenschaften des Bindemittels im Allgemeinen schlechter sind als die der wärmedämmenden Additive, sollte das Bindemittel nur in einem derartigen Umfang eingesetzt werden, wie dies für eine grundlegende mechanische Stabilität der betreffenden Schicht unabdingbar ist. Dafür sollte ein Anteil des Bindemittels an der Trockenmischung von etwa 25 Vol.-% ausreichend sein, beispielsweise 20 Vol.-% oder weniger, vorzugsweise 15 Vol.-% oder weniger, insbesondere 10 Vol.-% oder weniger. Die angegebenen Volumenanteile sind dabei jeweils als Schüttvolumen angegeben, insbesondere bei einer der Norm entsprechenden Schüttdichte. In diesem Zusammenhang sei erwähnt, dass bei Granulaten, also bei Gemengen aus einem körnigen Feststoff, dem sog. Schüttgut, und einem kontinuierlichen Fluid, welches die Hohlräume zwischen den Partikeln füllt, bspw. Luft oder Wasser, für die Dichtenbestimmung unterschiedliche Größen gebräuchlich sind, insbesondere die Reindichte, die Rohdichte, die Stampfdichte und die Schüttdichte. Während die Reindichte die Dichte der reinen Festkörperkomponente bezeichnet, wie sich diese ohne Poren und Zwischenräume ergibt, basiert die Rohdichte auf einem Rohvolumen, welches eventuelle Poren in den Granulatpartikeln mit umfasst. Der Schüttdichte liegt das Schüttvolumen zugrunde, welches sich bei einem genormten Schüttvorgang aus einer genormten Höhe einstellt und neben den Poren in den Partikeln auch die mit dem kontinuierlichen Fluid gefüllten Zwischenräume umfasst, und die Stampfdichte wird anhand des Stampfvolumens berechnet, welches das Granulat nach einem genormten Schüttvorgang und ein oder mehreren, genormten Stampf-Vorgängen einnimmt. Die Stampfdichte und die Schüttdichte sind über den sog. Hausner-Faktor miteinander verknüpft, wobei ein Hausner-Faktor von 1 bedeutet, dass das betreffende Granulat sich beim stampfen kaum oder gar nicht kompaktiert. Wie die Rein- und Rohdichte, so sind auch die Schütt- und Stampfdichten reine Materialgrößen, welche von Partikelgröße und -form und dem daraus folgenden Schütt- und Kompaktierverhalten abhängen. Insofern lässt sich die genormte Schüttdichte eines Granulats bspw. nach der DIN EN ISO 60 [2] und DIN EN ISO 61 [3] zur Messung von Schüttdichte und Rieselfähigkeit ermitteln; hierfür sind spezielle Messgeräte im Handel. Außerdem existieren Tabellen mit den Schüttdichten der unterschiedlichsten Materialien. Zum Beispiel gibt Römpps ChemieLexikon, 7. Auflage unter dem Stichwort "Schüttgewicht" als Schüttdichte für Zement in Pulverform 1.200 kg/m³ an, für Baugips 1.250 kg/m³, oder für Sand 1.800 kg/m³.

Je nach verwendetem Leichtzuschlagstoff kann das Gewichtsverhältnis zwischen Bindemittel und wärmedämmenden Leichtzuschlagstoffen in weiten Grenzen variieren. Es ist daher nicht ohne weiteres möglich, ein Massen- oder Gewichtsverhältnis für die Trockenmischung anzugeben. Dennoch ist im Allgemeinen das Gewichtsverhältnis zwischen wärmedämmenden Additiven und Bindemittel gleich oder größer als 1 : 1, also bspw. 1,2 : 1 oder mehr, vorzugsweise 1,4 : 1 oder mehr; andererseits liegt das Verhältnis zumeist bei 3 : 1 oder darunter, beispielsweise bei 2,5 : 1 oder darunter, vorzugsweise bei 2 : 1 oder darunter, insbesondere bei 1,8 : 1 oder darunter.

In einem mit Wasser angemachten, aber noch nicht geschäumten Zustand ist in der nassen Mischung das Verhältnis der Volumenbestandteile zwischen wärmedämmenden Additiven einerseits und andererseits der Fraktion bestehend aus Bindemittel und Wasser im Allgemeinen gleich oder größer als 3 : 1, also bspw. 4 : 1 oder mehr, vorzugsweise 6 : 1 oder mehr, insbesondere 10 : 1 oder mehr; andererseits liegt dieses Verhältnis der Volumenbestandteile zumeist bei 25 : 1 oder darunter, vorzugsweise bei 20 : 1 oder darunter, insbesondere bei 18 : 1 oder darunter.

Bevorzugt weist die mit der erfindungsgemässen Vorrichtung herstellbare Masse im geschäumten und abgebundenen Zustand folgende Zusammensetzung auf:
≤ 7,5 Vol.-% Bindemittel,
≥ 22,5 Vol.-% wärmedämmende Additive; sowie
≥ 70 Vol.-% Luftporen.

In dem geschäumten und abgebundenen Zustand ist ein ggf. zuvor beigemengter Wasseranteil bereits als Kristallwasser gebunden. Man erkennt, dass dabei einerseits das Volumen-Verhältnis zwischen Additiven und Bindemittel von mindestens 3 : 1 eingehalten ist, und dass andererseits die Poren wenigstens etwa zwei Drittel des Gesamtvolumens einnehmen.

Bei einer spezielleren Zusammensetzung, nämlich der folgenden:
≤ 5 Vol.-% Bindemittel,
≥ 20 Vol.-% wärmedämmende Additive; sowie
≥ 75 Vol.-% Luftporen,
bilden im geschäumten und abgebundenen Zustand die Luftporen sogar wenigstens drei Viertel des Gesamtvolumens. Außerdem ist das Volumenverhältnis zwischen wärmedämmenden Additiven und Bindemittel sogar 4 : 1 oder größer. Im Ergebnis ist das Wärmedämmungsvermögen einer derartigen Zusammensetzung daher gesteigert.

Noch bessere Wärmedämmungseigenschaften bietet die folgende Zusammensetzung für den geschäumten und abgebundenen Zustand:
≤ 4 Vol.-% Bindemittel,
≥ 16 Vol.-% wärmedämmende Additive; sowie
≥ 80 Vol.-% Luftporen.

Hierbei umfassen die Luftporen sogar wenigstens vier Fünftel des Gesamtvolumens, so dass sich exzellente Wärmedämmungseigenschaften erzielen lassen.

Der Bindemittelanteil in der nicht verfestigten Trockenmischung kann dabei zwischen 1 und 50 Vol.-% liegen, beispielsweise zwischen 1 und 40 Vol.-%, vorzugsweise zwischen 1 und 30 Vol.-%. entnehmen, dass der Bindemittelanteil bis auf einen sehr kleinen Restwert von nur etwa 1 Vol.-% reduziert sein kann.

Der Anteil wärmedämmender Additive in der nicht verfestigten Trockenmischung sollte zwischen 50 und 99 Vol.-% liegen, beispielsweise bei 60 Vol.-% oder darüber, vorzugsweise bei 70 Vol.-% oder darüber. Die Kombination eines derart hohen Wärmedämmungsanteils mit einem hohen Luftporenanteil führt schließlich zu einem optimalen Wärmdeämmungswert, so dass trotz der mineralischen Isolation die Schichtdicke minimiert werden kann. Beispielsweise beträgt die Dicke der hergestellten Wärmedämmungsschicht 20 cm oder weniger, vorzugsweise 15 cm oder weniger, insbesondere 12 cm oder weniger. Angestrebt wird eine Schichtstärke in der Größenordnung zwischen 8 und 10 cm, also in der Größenordnung üblicher Putz- und Isolationsstärken.

Bevorzugt wird ein anorganisches Bindemittel, insbesondere Kalk, Zement oder Gips, in reiner Form oder als Verschnitt, verwendet. In Betracht kommen darüber hinaus eventuell noch andere anorganische Bindemittel wie bspw. Kieselsäure bzw. Wasserglas. Die Frage, ob das Bindemittel hydraulisch aushärtet oder nicht, spielt im Allgemeinen nur eine untergeordnete Bedeutung.

Weitere Vorteile ergeben sich daraus, dass wenigstens ein wärmedämmendes Additiv Poren oder sonstige Hohlräume aufweist, beispielsweise in einem Volumenanteil von 10 Vol.-% oder mehr, vorzugsweise in einem Volumenanteil von 30 Vol.-% oder mehr, insbesondere in einem Volumenanteil von 50 Vol.-% oder mehr, jeweils bezogen auf das Volumen des Additivs. Derartige wärmedämmende Additive haben von Haus aus ein sehr gutes Wärmedämmungsvermögen und bringen dieses direkt in den Wärmedämmungsbeiwert der hergestellten Masse bzw. Schicht ein.

Es hat sich bewährt, wenigstens ein wärmedämmendes Additiv zu verwenden, welches Silziumdioxid SiO₂ enthält, beispielsweise in einem Gewichtsanteil von wenigstens 25 Gew.-%, vorzugsweise in einem Gewichtsanteil von wenigstens 35 Gew.-%, insbesondere in einem Gewichtsanteil von wenigstens 45 Gew.-%, jeweils bezogen auf das Gewicht des Additivs. Es hat sich herausgestellt, dass die Struktur von Siliziumdioxid ausreichend fest ist, um trotz eines hohen Porenanteils eine ausreichende mechanische Stabilität mitzubringen.

Das (die) wärmedämmende(n) Additiv(e) können aus einer oder mehreren der folgenden Substanzen bestehen: Vermiculite, Perlite, Aerogele, Blähgläser, synthetische Glasschäume, Glashohlkugeln, Glasflakes oder poröse mineralische Sande, natürlich oder synthetisch hergestellt wie Bims oder Tuff. Diese Materialien haben - zumeist aufgrund ihres hohen Porengehaltes - gute Wärmedämmungseigenschaften, die von großem Wert sind. Viele dieser Materialien sind Silikatmineralien, welche als wärmedämmende Additive bevorzugt werden. So ist Vermiculit ein Schichtsilikat; Perlit ist vulkanisches Glas, auch als Obsidian bezeichnet, und enthält Quarz, Christobalit und Feldspat. Aerogel wird häufig aus Silicatglas hergestellt, bspw. unter Verwendung von Kieselsäure, und kann bis zu 99,98 Vol.-% Poren aufweisen. Blähglas und Glasschaum werden zumeist aus Altglas hergestellt, Glasflakes fallen in der Glasindustrie an oder können gezielt hergestellt werden. Bims ist ein poröses, glasiges Vulkangestein, dessen Mineralanteil aus erhärteter Lava besteht und also etwa 45 bis 70 Gew.-% SiO₂ aufweist; auch Tuff-Gestein ist vulkanischen Ursprungs und umfasst im Wesentlichen erstarrte Pyroklasten. Die pulverförmige Mischung sollte vor dem Schäumen nass angemacht werden, insbesondere mit Wasser. Damit wird dem Bindemittel das erforderliche H₂O angeboten, welches von jenem für seinen Abbindeprozess benötigt und dabei in Form von Kristallwasser in seine Struktur eingebaut wird. Infolge der angestrebten Verarbeitbarkeit vor Ort sowie ohne gesonderte Energiezufuhr sind bspw. Ausbrennstoffe als Porenbildner nicht geeignet. Die wärmedämmenden Additive sind in noch nicht abgebundenem Zustand zumeist als ein Granulat von harten, Poren aufweisenden Partikel ausgebildet, bspw. in Form von Blähglas od. dgl., wobei die Hülle oder Matrix der Partikel von dem Bindemittel benetzbar ist, um eine dreidimensionale Matrix zu bilden; das Bindemittel ist zumeist in Pulverform vorhanden und in der Trockenmischung bereits unteraemischt. Im Sinne eines einfach anzuwendenden Materials kann auch auf chemische Schaumbildner verzichtet werden, welche erst kurz vor dem Abbinden beizufügen wären. Statt dessen sieht die Erfindung vor, die nasse mineralische Mischung in angemachtem Zustand unter Verwendung einer mechanischen Schäumvorrichtung mit Poren zu versetzen. Es kann sich hierbei bevorzugt um eine Art Knetvorrichtung handeln, die innerhalb der angemachten Substanz einen Druckgradienten erzeugt, insbesondere mit lokalen Unterdruckbereichen. Dort kann die feuchte Masse aufreißen, und es bilden sich Poren. Wenn in diesen Bereichen gezielt Luft aktiv eingebracht oder zumindest passiv angeboten wird, schließen sich diese Poren in der Folge nicht wieder, sondern bleiben bis zur Verarbeitung erhalten. Ein optimales Ergebnis erhält man daher, wenn die nasse mineralische Mischung unter aktiver oder passiver Luftzugabe in Kombination mit einem statischen Mischer aufgeschäumt ist, bspw. unter Verwendung einer oder mehrerer, in die Masse hineinragender (Druck-) Luft führender und abgebender Lanzen.

Damit die entstandenen Luftporen bei der anschließenden Verarbeitung nicht wieder zerstört werden, kann es empfehlenswert sein, die nasse mineralische Mischung nicht durch Spritzen zu verarbeiten, sondern eher durch Sprudeln, d.h., nur unter mäßigem Druck, welcher bevorzugt derart gering ist, dass die feuchte Masse gerade eben aus einem Schlauch od. dgl. locker hervorsprudelt, jedoch nicht unter Druck herausspritzt.

Zur Verbesserung der Festigkeitseigenschaften kann die pulverförmige oder nasse mineralische Mischung mit Fasern vermischt sein, insbesondere mit Glasfasern, welche in ausgehärtetem Zustand als innere Armierung dienen. Bevorzugt sollte hierfür ein alkaliresitentes Glas verwendet werden.

Zur Verbesserung der mechanischen Festigkeit kann das ausgehärtete Material ein Gewebe enthalten oder auf ein Gewebe aufgetragen sein, insbesondere ein 3D-Gewebe und/oder eine Wabenstruktur. Auch ein derartiges Gewebe bzw. eine derartige Struktur kann als Armierung dienen. AIs Wabenstruktur haben sich dabei ein- oder beidseitig offene Gefügestrukturen mit Wabengeometrie bewährt, welche vorzugsweise jeweils aus einer Vielzahl von aneinander grenzenden Kreisen oder Vielecken, bspw. Sechsecken, Vierecken oder Dreiecken, dienen und also ein flächiges Netz bilden, in dessen Ausnehmungen die mit der erfindungsgemäßen Vorrichtung hergestellte Masse eindringen und sich darin verankern kann.

In einem ersten, bevorzugten Anwendungsfall wird das ausgehärtete Material als Beschichtung eines tragenden Bauteils verwendet, ist insbesondere auf jenes aufgetragen, insbesondere als Putz auf einer Wand oder Decke. Mit dieser Technik können insbesondere Außenwände isoliert und gleichzeitig verputzt werden. Dabei kommt die Masse bevorzugt auf der Außenwand zum Einsatz, obzwar sie grundsätzlich auch auf einer Innenwand verwendet werden kann.

Es besteht die Möglichkeit, dass das ausgehärtete Material mit einem Oberputz abgedeckt ist. Dieser kann bspw. dazu dienen, die Poren nach außen zu verschließen, falls wasserabweisende Eigenschaften gewünscht sind, oder er kann in der mit der erfindungsgemäßen Vorrichtung hergestellten Masse enthaltene Fasern bedecken, einerseits um jene zu schützen und andererseits aus ästhetischen Gründen.

Andererseits ist es auch möglich, dass das geschäumte Material als Füllung in einer hohlen Struktur dient, bspw. in einem oder mehreren hohlen Mauersteinen. In diesem Falle steht insbesondere die Gesamtheit der Eigenschaften im Vordergrund, also die Verbindung von Wärmedämmung und Schalldämmung sowie Festigkeit.

Das ausgehärtete Material kann auch selbsttragend sein, bspw. in Form einer Platte und/oder eines Raumteilers. In diesem Fall wird im Allgemeinen der Bindemittelanteil eher größer anzusetzen sein als bei anderen Anwendungen in Verbindung mit tragenden Strukturen. Auch sollte in diesen Fällen auf eine Armierung nicht verzichtet werden, wobei diese in Form von eingelagerten Fasern, aber auch in Form von Geweben und/oder Wabenstrukturen eingesetzt werden kann.

Die ausgehärtete Substanz kann eine Wärmeleitzahl von 0,02 bis 0,06 W/(m*K) aufweisen Die Wärmeleitzahl ist in DIN 4108 definiert. Sie ist eine Maßzahl für die Wärmeleitfähigkeit λ eines Baustoffes; ihre Einheit ist Watt pro Meter (Dicke) und Kelvin Temperaturdifferenz. Die obigen Bereichsgrenzen besagen also, dass im stationären Zustand durch eine Fläche von 1 m² ein Wärmestrom von 0,02 bis 0,06 W fließt - also nur eine Wärmemenge von 0,02 bis 0,06 Joule pro Sekunde - wenn senkrecht dazu ein Temperaturgefälle von 1 K/m herrscht.

Ein Verfahren zur Herstellung eines überwiegend anorganischen, insbesondere mineralischen Materials zum Zweck der Wärmedämmung im Bauwesen, insbesondere für die Beschichtung von tragenden Strukturen und/oder für das Füllen von Hohlräumen oder als selbsttragendes Bauteil, enthaltend wenigstens ein Bindemittel sowie wenigstens ein wärmedämmendes Additiv, zeichnet sich dadurch aus, dass das Material vor dem Abbinden aufgeschäumt wird, insbesondere mechanisch aufgeschäumt, derart, dass es im abgebundenen Zustand eine feste Konsistenz aufweist mit einer dreidimensionalen Matrix, der Struktur eines Schaums und einem Porenvolumen von 60 Vol.-% oder mehr, vorzugsweise von 70 Vol.-% oder mehr, insbesondere von 80 Vol.-% oder mehr. Ein mechanisches Aufschäumen bietet den Vorteil, dass für das Aufschäumen keine chemische Reaktion erforderlich ist, also ein einziges, chemisch stabiles Gemisch verwendet werden kann, welches einzig und allein durch die Zugabe von Wasser abbindet.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine schematische Darstellung einer erfindungsgemässen Mörtelmisch- und -pumpeinrichtung;

- Fig. 2: einen Rührer für die Mischeinrichtung stromaufwärts der Pumpeinrichtung nach Fig. 1;
- Fig. 3: eine Seele oder Lanze mit Strömungshindernissen für die Mörtelabgabeeinrichtung stromabwärts der Pumpeinrichtung aus Fig. 1; sowie

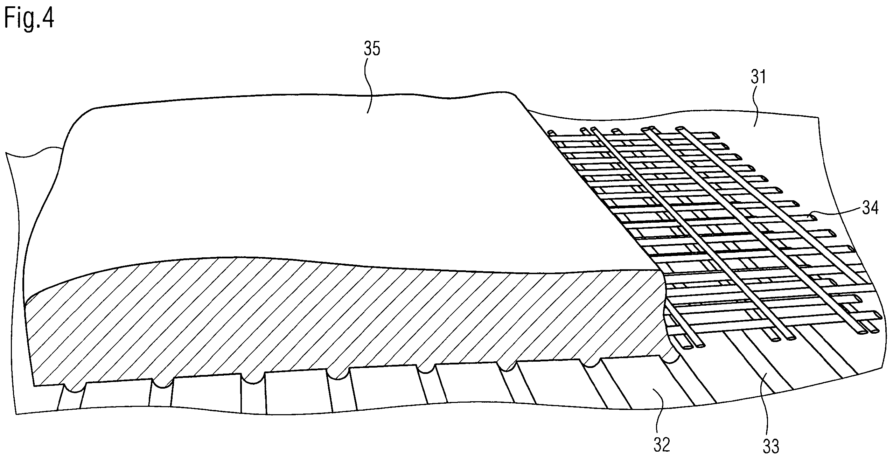

- Fig. 4: einen mit der Vorrichtung nach den Fig. 1 bis 3 verputzten Wandabschnitt, teilweise abgebrochen.

Zum Verputzen einer Wand 31, bspw. einer Mauer aus gebrannten Ziegeln 32 mit vorzugsweise vertikalen, nutformigen Vertiefungen 33, wird dort zunächst ein Armierungsgewebe 34, bspw. aus Nylon od. dgl., befestigt.

Sodann wird die Masse für den Putz 35 angemischt:
Hierzu wird bspw. ein granulat- oder pulverförmiges, wärmedämmendes Additiv mit einem Bindemittel in einem Volumenverhältnis von etwa 4 : 1 trocken vermischt, ggf. auch 3 : 1 oder 2 : 1 oder 1,5 : 1, bis herunter zu 1,2 : 1; möglicherweise aber auch bis zu 5 : 1. Als wärmedämmendes Additiv wird bspw. Perlit oder Aerogel auf Basis von Silikatglas verwendet, und als Bindemittel bspw. Zement oder Kalk oder Gips oder Mischungen derselben.

Nach dem Vermischen dieser Komponenten wird die Trockenmischung mit Wasser angemacht, wobei sich die erforderliche Wassermenge vor allem nach der angestrebten Konsistenz richtet; das Wasser wird beim Abbinden zum Teil in Kristallwasser umgewandelt; ein ggf. überschüssiger Wasseranteil kann verdunsten.

Beim Anmischen oder im Anschluss daran wird die feuchte Masse in einer Schäumvorrichtung aufgeschäumt. Diese kann einer Mischvorrichtung nachgeschalten sein. In einer solchen Mischvorrichtung wird durch eine große Anzahl von beweglichen Elementen die Masse gerührt, bis sich die Trockenmischung und das Anmachwasser möglichst homogen verteilt haben.

Die erfindungsgemäße Mörtelmisch- und -pumpeinrichtung 1 kann über eine Aufgabeeinrichtung 2 mit einer Trockenmischung oder mit den einzelnen Zutaten für den Mörtel beschickt werden. Von dort aus gelangt die noch trockene Mörtelmischung sodann bspw. mittels einer Förderschnecke 3 in die eigentliche Mischkammer oder den eigentlichen Mischtopf 4, wo im benötigten Umfang Wasser hinzugegeben und dieses sodann mit der Trockenmischung vermischt wird.

Der Mischvorgang wird dabei ausgeführt von einem Rührer 5, der um eine im dargestellten Beispiel etwa vertikale Achse 6 rotiert, angetrieben von einem Elektromotor 7 oben auf der Michkammer bzw. dem Mischtopf 4. Bevorzugt handelt es sich um einen leistungsstarken Elektromotor 7 mit einer Nennleistung von 5 kW oder darüber; zwischen dem Elektromotor 7 und dem Rührer kann überdies ein Untersetzungsgetriebe vorgesehen sein, damit der Rührer zwar langsam, aber kräftig rotiert wird und dabei in der Lage ist, der zähen Mörtelmasse seine Bewegung aufzuzwingen.

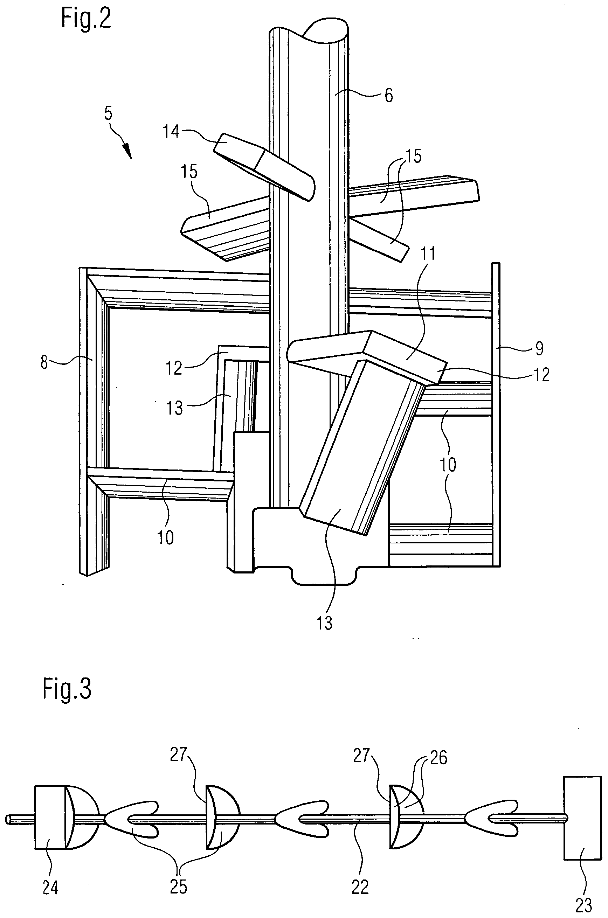

Der Rührer 5 ist in Fig. 2 in einer perspektivischen Ansicht vergrößert wiedergegeben. Man erkennt neben zwei einander bezüglich der Rührerachse 6 diametral gegenüberliegenden, rahmenförmigen, insbesondere U-förmigen Rührfortsätzen 8, 9, deren Stege 10 jedenfalls teilweise auf unterschiedlichen axialen Höhen liegen können, zwei weitere, demgegenüber um jeweils etwa 90° versetzte Rührfortsätze 11, umfassend bspw. je einen radialen Rührflügel 12 und einen von der betreffenden Flügelebene etwa lotrecht abragenden, überwiegend in axialer Richtung verlaufenden Flügel 13.

Man kann ferner erkennen, dass sowohl die radialen Stege 10 der U-fömigen Rührfortsätze 8, 9 als auch die radialen Rührflügel 12 der zusätzlichen Rührfortsätze 11 in Drehrichtung gegenüber der von der Rührerachse 6 lotrecht durchsetzten Hauptebene angestellt sind; allerdings ist wenigstens ein Rührflügel 12 eines zusätzlichen Rührfortsatzes 11 - vorzugsweise die Rührflügel 12 beider zusätzlicher Rührfortsätze 11 - in entgegengesetzter Richtung angestellt als die radialen Stege 10 der U-fömigen Rührfortsätze 8, 9. Dadurch werden bei kontinuierlichem Rühren abwechselnd nach oben und nach unten gerichtete Axialbewegungen innerhalb der Mörtelmasse hervorgerufen, wodurch sich Verwirbelungen bilden können, die für eine Porenbildung besonders förderlich sind.

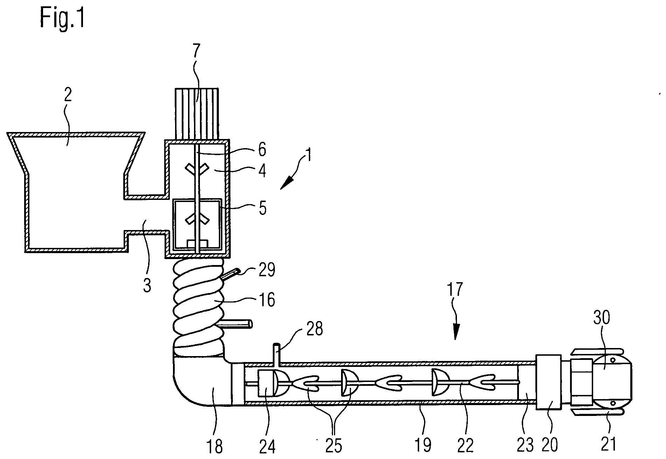

Wie Fig. 1 weiter zeigt, gibt es ober- und/oder unterhalb dieser Rührfortsätze 8, 9, 11 weitere Rührflügel 14, 15, welche etwa innerhalb einer von der Rührerachse 6 lotrcht durchsetzten Ebene liegen und sich etwa in radialer Richtung von der Rührerachse 6 weg erstrecken. Auch die Rührflügel 14, 15 sind in Drehrichtung des Rührers 5 gegenüber der von der Rührerachse 6 lotrecht durchsetzten Hauptebene angestellt; allerdings ist auch hier wenigstens ein Rührflügel 14 oder eventuell sogar zwei Rührflügel 14 in entgegengesetzter Richtung angestellt als die übrigen Rührflügel 15 dieser propellerartigen Rührflügelanordnung 14, 15. Dadurch werden bei kontinuierlichem Rühren abwechselnd nach oben und nach unten gerichtete Axialbewegungen innerhalb der Mörtelmasse hervorgerufen, wodurch sich Verwirbelungen bilden können, die für eine Porenbildung besonders förderlich sind. Ferner können diese Rührflügel 14, 15 in gleicher Zahl n vorhanden sein wie die Rührfortsätze 8, 9, 11 und gegenüber jenen um jeweils 180°/n versetzt angeordnet sein - also gerade immer etwa mittig zwischen zwei benachbarten Rührfortsätzen 8, 9, 11, um auch dort für Verwirbelung zu Sorgen. Sämtliche Rührflügel 14, 15 und -fortsätze 8, 9, 11 bestehen bspw. aus 5 mm starken Flacheisenstücken, welche bspw. mit der Rührerachse 6 verschweißt sind.

An den Boden der Mischkammer bzw. des Mischtopfs 4 schließt sich sodann eine Schneckenmantelpumpe 16 an, wobei deren Schneckenachse bevorzugt in einer gemeinsamen Flucht mit der Rührerachse 6 liegt, und die beim Zusammenbau form- und damit drehschlüssig mit der Rührerachse 6 zusammensteckbar ist, damit die Förderschnecke der Schneckenmantelpumpe 16 ebenfalls von dem Elektromotor 7 antreibbar ist.

Natürlich sind alle Komponenten der erfindungsgemäßen Mörtelmisch- und - pumpeinrichtung 1 leicht demontierbar, damit sie nach einem Einsatz leicht wieder gereinigt werden können und die Mörtelmasse nicht im Inneren der Maschine erstarrt.

Dies gilt auch für die stromabwärts der Schneckenmantelpumpe 16 angeordnete Mörtelabgabeeinrichtung 17: Diese ist - ggf. unter Zwischenschaltung eines Kniestückes 18 - am Ausgang der Mörtelpumpe 16 angeschlossen und besteht im Wesentlichen aus einem gerade gestreckten Rohr 19, auf dessen Ende ein den Strömungsquerschnitt verjüngender Deckel 20 aufgeschraubt ist. An diesem Deckel wiederum sind Anschlußelemente 21 für einen nicht dargestellten Schlauch angeordnet, bspw. Verriegelungselemente nach Art von Kniegelenken od. dgl..

Auf der stromaufwärtigen Kante des den Strömungsquerschnitt verjüngenden Deckels 20 stützt sich eine Seele oder Lanze 22 mit einer an ihrem stromabwärtigen Ende angeordneten Platte 23 ab. Die Seele oder Lanze 22 besteht aus einem massiven Metallstab mit einem Durchmesser von wenigstens 5 mm, bevorzugt etwa 10 mm bis 20 mm, und erstreckt sich konzentrisch und koaxial innerhalb des Rohres 19, idealerweise über dessen gesamten, gerade gestreckten Längenbschnitt. Die Seele oder Lanze 22 wird in dieser zentralen Position durch eine weitere Platte 24 an ihrem stromaufwärtigen Ende gehalten, die etwa die gleichen Abmessungen haben kann wie die stromabwärtige Metallplatte 23, nämlich eine rechteckige Gestalt mit einer Erstreckung quer zur Seele oder Lanze 22, welche etwa dem Innendurchmesser des Rohrs 19 entspricht. Die beiden Halteplatten 23, 24 können zusammen mit der Längsachse der Seele oder Lanze 22 in einer gemeinsamen Ebene liegen oder auch gegeneinander versetzt sein, bspw. um einen Winkel von 90°, bezogen auf die Längsachse der Seele oder Lanze 22.

Zwischen ihren beiden Enden trägt die Seele oder Lanze 22 mehrere, flächige Strömungshindernisse 25. Diese Strömungshindernisse 25 sind jeweils aus einem ursprünglich runden Blechzuschnitt gebogen, wobei der Durchmesser dieses Blechzuschnitts etwa dem Innendurchmesser des Rohrs 19 entspricht. Diese Blechzuschnitte weisen jeweils in der Mitte eine Durchsteckausnehmung zum Hindurchstecken der Seele oder Lanze 22 auf. Ferner sind sie derart gebogen oder gefaltet, dass sich zwei etwa deckungsgleiche Hälften 26 ergeben, wobei die Biegelinie 27 jeweils durch die Durchsteckausnehmung verläuft und dadurch den Blechzuschnitt in zwei gleiche Hälften 26 teilt. Diese beiden Hälften 26 liegen jedoch nicht paralle zueinander, sondern divergieren voneinander unter einem Winkel, der bevorzugt etwa zwischen 30° und 60° liegt. Ein Querschnitt durch ein derartiges Strömungshinernis 25 kann demnach als V-förmig beschrieben werden, wobei die beiden Schenkel des V je einer Hälfte 26 des Hindernisses 25 entspricht, und die Spitze des V der Biegelinie 27.

Diese flächigen Strömungshindernisse 25 sind hintereinander auf die Seele oder Lanze 22 aufgesteckt, derart, dass die Biegelinie 27 jeweils stromaufwärts der Hälften 26 liegt, mithin die Spitze des V nach stromaufwärts weist.

Darüber hinaus sind die Strömungshindernisse 25 derart ausgerichtet, dass die Biegelinien 27 aufeinanderfolgender Strömungshindernisse 25 nicht parallel zueinander verlaufen, sondern um die Längsachse der Seele oder Lanze 22 gegeneinander verdreht sind, bspw. um einen Winkel von 90°, wie aus Fig. 3 ersichtlich.

Schließlich weisen aufeinanderfolgende Strömungshindernisse 25 einen gegenseitigen Abstand auf, der vorzugsweise in der Größenordnung zwischen dem Radius und dem Durchmesser des Rohres 19 liegt. In diesen Positionen sind die Strömungshindernisse 25 an der Seele oder Lanze 22 befestigt, vorzugsweise festgeschweißt.

Wird die Förderpumpe 16 aktiviert, so strömt der Mörtel durch das Rohr 19. Dabei wird er gezwungen, jedes der Strömungshindernisse 25 zu umfließen, wobei sich der Gradient von Strömungsrichtung und -geschwindigkeit innerhalb der Strömung ändert. Davon verursacht ergibt sich eine schwankende Druckverteilung innerhalb der Mörtelmasse mit lokalen Unterdruckbereichen, wodurch bereits vorhandene Poren aufreißen und sich somit der Porenanteil deutlich erhöht.

Damit sich der Mörtel bei Bedarf mit Luft versorgen kann, um entstehende Poren alsbald zu füllen und dadurch ein Zusammenfallen derselben zu vermeiden, sind insbesondere in dem Rohr 19, ggf. aber auch an der Schneckenmantelpumpe 16 jeweils Luftzuführöffnungen 28, 29 angeordnet. Diese können wahlweise mit dem atmosphärischem Luftdruck kommunizieren oder aber mit Druckluft gespeist werden. Überdies kann an diesen Luftzuführöffnungen 28, 29 jeweils ein Rückschlagventil vorgesehen sein, welches den Luftzutritt nach innen ermöglicht, den Austritt von Luft oder Mörtelbestandteilen dagegen unterbindet.

Von der Pumpeinrichtung wird die Putzmasse 35 ohne großen Druck zu einem Auslaß 30 gefördert. Wird an einem dortigen, stromabwärtigen Anschluß 30 des Rohrs 19 beispielsweise ein Schlauch angeschlossen, so sprudelt der in verstärktem Maße mit Luftporen versetzte Mörtel 35 dort locker hervor, und kann sodann bspw. an eine Hauswand 31 gefördert und dort zum Verputzen derselben verwendet werden. An der Wand 31 kann sie ein dortiges Armierungsgewebe 34 umfließen und die nutförmigen Vertiefungen 33 füllen, ohne dass die inneren Poren sich wieder schließen können. Die Putzmasse 35 wird mechanisch geglättet, bspw. mit einer Putzkelle, und härtet schließlich an der Wand 31 aus.

Durch die verbesserten wärmedämmenden Eigenschaften eines derartigen Putzes kann in vielen Fällen eine zusätzliche Wärmedämmung mit bspw. organischen Substanzen vermieden werden. Der Vorteil ist, dass anorganische Substanzen, insbesondere mineralische Massen auf der Basis von Kalk und/oder Gips und/oder Zement, auch als Zwei- oder Dreistoffgemisch, im Allgemeinen nicht brennbar sind. Diese Massen können andererseits auch für Estrich verwendet werden, ferner für Trocken- oder Naßmörtelwände, oder zur Verarbeitung zu Wärmedämmplatten, etc..

Weitere Vorteile derartiger mineralischer Massen sind, dass sie diffusionsoffen sind und Feuchtigkeit passieren lassen, und dass sie sehr einfach aufgetragen und verarbeitet werden können, ggf. auch in mehreren Schichten bis zu Gesamt-Schichtdicken in der Größenordnung von bspw. 5 cm.

Je nach Anwendungsfall kann der ausgehärtete Putz 35 nachbearbeitet werden, bspw. mit einem wasserabweisenden Oberputz versehen und/oder gestrichen werden.

Bei größeren Flächen kann die Masse 35 zur Erleichterung des Anhaftens während des nassen Zustands hinter eine vor der Wand 31 bspw. in einem Abstand von bis zu 20 Zentimeter montierten Schalung gefüllt werden, beispielsweise in einem Abstand von 15 cm oder weniger, und/oder in einem Abstand von 2 cm oder mehr, vorzugsweise 4 cm oder mehr, und/oder in einem Abstand von 6 bis 12 cm, insbesondere in einem Abstand von 8 bis 10 cm. Wird nach dem Aushärten die Schalung abgenommen, so verbleibt die Putzschicht 35 mit einer maximal glatten und ebenen Oberfläche, oder jene weist eine definierte Struktur auf entsprechend einer in die Schalung eingelegten Struktur-Matritze.

Eine mit der erfindungsgemässen Vorrichtung hergestellte Masse 35 kann andererseits auch in Hohlräume der Ziegel 32 oder anderer Steine, bspw. Kalksandsteine oder Zementblocks, etc., eingefüllt werden, um Wärme- und/oder Schalldämmungseigenschaften zu verbessern.

Darüber hinaus kann eine Masse 35 auch zu selbsttragenden Bauteilen, insbesondere Platten verarbeitet werden, indem sie nicht an einer Tragstruktur, bspw. einer Wand 31, aushärtet und sich dabei mit jener verbindet, sondern indem sie bspw. ohne eine solche Tragstruktur aushärtet, bspw. auf einer ebenen, glatten Grundplatte, bspw. aus Metall, von welcher sie nach dem Aushärten anschließend gelöst wird. Zur weiteren Versteifung einer derartigen Platte kann diese bspw. mit Bahnen eines flächigen Mediums, bspw. Papier, beklebt werden.

**Bezugszeichenliste**

| | | | |
|---|---|---|---|
| 1 | Mörtelmischer und -pumpe | 26 | Hälfte |
| 2 | Aufgabeeinrichtung | 27 | Biegelinie |
| 3 | Förderschnecke | 28 | Luftzuführöffnung |
| 4 | Mischtopf | 29 | Luftzuführöffnung |
| 5 | Rührer | 30 | Schlauchanschluß |
| 6 | Achse | 31 | Wand |
| 7 | Elektromotor | 32 | Ziegel |
| 8 | Rührfortsatz | 33 | Nut |
| 9 | Rührfortsatz | 34 | Armierungsgewebe |
| 10 | Steg | 35 | Putz |
| 11 | Rührfortsatz | | |
| 12 | Rührflügel | | |
| 13 | Flügel | | |
| 14 | Rührflügel | | |
| 15 | Rührflügel | | |
| 16 | Förderpumpe | | |
| 17 | Mörtelabgabeeinrichtung | | |
| 18 | Kniestück | | |
| 19 | Rohr | | |
| 20 | Deckel | | |
| 21 | Ansschlußelement | | |
| 22 | Seele oder Lanze | | |
| 23 | Platte | | |
| 24 | Platte | | |
| 25 | Strömungshindernis | | |

## Patentansprüche

1. Vorrichtung zur Herstellung eines mineralischen, geschäumten Materials (35), umfassend eine Mörtelpumpe und/oder einen Mörtelmischer (1) mit einer automatischen Abgabeeinrichtung (17), **dadurch gekennzeichnet, dass** im Bereich der Abgabeeinrichtung (17) der freie Querschnitt des Strömungspfades für den Mörtel verjüngt ist durch zwei oder mehrere, in Strömungsrichtung des Mörtels hintereinander auf einer zentralen Seele oder Lanze (22) angeordnete, flächige Hindernisse (25) ausgebildet als gebogene Plättchen aufweisend eine V-förmigen Querschnitt, wobei die Spitze des V stromaufwärts weist, die beiden freien Schenkelenden dagegen stromabwärts, und wobei im Bereich eines die flächigen Hindernisse (25) umgebenden Rohrs (19) wenigstens ein Anschluss (28) zur aktiven oder passiven Zuführung von Luft vorgesehen ist.

2. Vorrichtung (1) nach Anspruch 1, **dadurch gekennzeichnet, dass** die Seele oder Lanze (22) konzentrisch zu einem Rohr (19) der Abgabeeinrichtung (17) verläuft.

3. Vorrichtung (1) nach einem der Ansprüche 1 bis 2, **dadurch gekennzeichnet, dass** die Seele oder Lanze (22) an ihrem stromabwärtigen Ende eine quer bzw. diametral zu dem umgebenden Rohr (19) verlaufende Platte (23) aufweist, die durch einen am stromabwärtigen Rohrende befestigbaren, bspw. aufschraubbaren Deckel (20) entgegen der Strömungsrichtung abgestützt wird.

4. Vorrichtung (1) nach einem der Ansprüche 1 bis 3, **dadurch gekennzeichnet, dass** stromaufwärts der Abgabeeinrichtung (17) eine Pumpeinrichtung (16) vorgeschaltet ist, beispielsweise eine Schneckenmantelpumpe oder eine Schlauch- oder Kolbenpumpe, wobei vorzugsweise im Bereich der Pumpeinrichtung (16) wenigstens ein Anschluß (29) zur aktiven oder passiven Zuführung von Luft vorgesehen ist, und/oder wobei stromaufwärts der Pumpeinrichtung (16) eine Mischeinrichtung vorgeschaltet ist, insbesondere ein Mischtopf (4).

## Claims

1. Apparatus for preparation of a mineral foamed material (35), comprising a mortar pump and/or a mortar mixer (1) with an automatic dispensing facility (17) **characterized in that** the free cross-section of the flow path of the mortar is tapered in the area of the dispensing facility (17) by two or more flat obstacles (25) which are arranged on a central axial core or lance (22) one after another along the flow direction of the mortar, and which have the form of curved plates with a V-shaped cross-section. wherein the tip of the V points upstream, whereas the two free ends of the legs point downstream, and wherein at least one connection (28) for an active or passive air supply is provided in the area of a pipe (19) surrounding the flat obstacles (25).

2. Apparatus (1) according to claim 1, **characterized in that** the core or lance (22) extends concentrically to a pipe (19) of the dispensing facility (17).

3. Apparatus (1) according to one of the claims 1 to 2, **characterized in that** the core or lance (22) comprises, at its downstream end, a plate (23) which extends transversely or, respectively, diametrically to the surrounding pipe (19) and which is supported against the flow direction by a lid (20), which is attachable, for example screwable, on the downstream pipe end.

4. Apparatus (1) according to one of the claims 1 to 3, **characterized in that** a pumping facility (16) is prefixed upstream of the dispensing facility (17), for example a progressive cavity pump or a hose pump or a piston pump, wherein at least one connection (29) for an active or passive air supply is provided, preferably in the area of the pumping facility (16), and/or wherein a mixing facility, especially a mixing pot, is prefixed upstream of the pumping facility (16).

## Revendications

1. Dispositif pour la fabrication d'un matériau alvéolaire minéral (35), comprenant une pompe à mortier et/ou un mélangeur à mortier (1) avec une unité de distribution (17) automatique, **caractérisé en ce que** dans la zone de l'unité de distribution (17) la section transversale libre du trajet d'écoulement pour le mortier est rétrécie par deux ou plusieurs obstacles (25) plans, disposés successivement sur une âme ou lance (22) centrale dans le sens d'écoulement du mortier, lesdits obstacles sont conçus sous forme de plaquettes courbes présentant une section transversale en forme de V, **en ce que** la pointe du V est dirigée vers l'amont, les deux extrémités de branche libres sont en revanche dirigées vers l'aval, et **en ce qu'**au moins un raccordement (28) pour l'alimentation en air active ou passive est prévu dans la zone d'un tube (19) entourant les obstacles (25) plans.

2. Dispositif (1) selon la revendication 1, **caractérisé en ce que** l'âme ou lance (22) est concentrique à un tube (19) de l'unité de distribution (17).

3. Dispositif (1) selon l'une des revendications 1 à 2, **caractérisé en ce que** l'âme ou lance (22) comporte à son extrémité aval une plaque (23) transversale ou diamétrale par rapport au tube (19) l'entourant, ladite plaque étant soutenue dans le sens inverse de l'écoulement par un couvercle (20) qui peut être fixé, par exemple vissé, à l'extrémité aval du tube.

4. Dispositif (1) selon l'une des revendications 1 à 3, **caractérisé en ce qu'**un dispositif de pompage (16) est monté en amont de l'unité de distribution (17), par exemple une pompe à vis sans fin ou une pompe tubulaire ou péristaltique, **en ce qu'**au moins un raccordement (29) pour l'alimentation en air active ou passive est prévue de préférence dans la zone du dispositif de pompage (16), et/ou **en ce qu'**un dispositif de mélange est monté en amont du dispositif de pompage (16), en particulier un pot mélangeur (4).
